# FASCICULE DE BREVET EUROPEEN

(11) **EP 2 367 714 B1**
(45) Date de publication et mention de la délivrance du brevet: **14.08.2013**
(21) Numéro de dépôt: 09802165.2
(22) Date de dépôt: 11.12.2009
(51) Int. Cl.: B62K 15/00, B62K 11/00

(54) **STRUCTURE DE REPLIEMENT D'UN MOTOCYCLE AVEC VERROUILLAGE RAPIDE**
ZUSAMMENKLAPPBARE MOTORRADSTRUKTUR MIT SCHNELLVERRIEGELUNG
QUICK-LOCK MOTORCYCLE FOLD-UP STRUCTURE

(30) Priorité: 23.12.2008 FR 0859042
(43) Date de publication de la demande: 28.09.2011
(73) Titulaire: XOR.Motors, 13590 Meyreuil (FR)
(72) Inventeur: MARION, Fabrice, 75017 Paris (FR)
(74) Mandataire: Domange, Maxime
(86) Numéro de dépôt international: PCT/FR2009/052497
(87) Numéro de publication internationale: WO 2010/072940

(56) Documents cités:
- WO-A-99/51485
- WO-A-2007/109317
- BE-A- 628 783
- BE-A3- 1 004 957
- FR-A- 2 913 396

## Description

### Arrière-plan de l'invention

La présente invention se rapporte au domaine général des cycles pliables et plus particulièrement celui des véhicules motocycles et cyclomoteurs pliables.

Il existe actuellement de nombreux systèmes de pliage de cycles. Ces systèmes sont adaptés à une implémentation sur des cycles légers ne comportant pas de motorisation, ni de carénage.

Or, les contraintes d'encombrement et de robustesse sont très différentes à partir du moment où le véhicule présente une motorisation et éventuellement un carénage.

Le document FR 2 913 396 montre un véhicule motocycle comprenant un châssis évidé supportant un porte-selle et sur lequel est monté un bras oscillant portant une roue arrière. Dans ce document, l'ensemble bras oscillant/roue arrière vient se loger dans l'évidement du châssis par un mouvement de coulissement. La manipulation de l'objet présenté dans ce document est complexe et peu satisfaisante à l'usage.

L'invention s'intéresse à rendre possible un pliage/dépliage compact d'un véhicule motorisé du style scooter ou motocyclette, dont la mise en oeuvre est extrêmement simple pour l'utilisateur.

### Objet et résumé de l'invention

La présente invention a pour objet de réaliser un véhicule motocycle comprenant un châssis évidé en son centre et supportant au moins un montant porte-selle pour porter une selle, châssis sur lequel est monté, autour d'un axe de rotation, un bras oscillant portant une roue arrière, caractérisé en ce que l'ensemble bras oscillant/roue arrière est libre de pivoter vers l'avant du véhicule et par le bas du véhicule autour de son axe de rotation pour venir se loger dans l'évidement du châssis.

Selon l'invention, le bras oscillant a un mouvement s'effectuant par rotation en passant en dessous du châssis jusqu'à ce que l'ensemble bras oscillant/roue arrière soit positionné non plus vers l'arrière en extension du châssis mais vers l'avant à l'intérieur de celui-ci.

En passant par en dessous, la roue arrière peut rester au sol et rouler, ce qui est un avantage si son poids est important, par exemple lorsqu'elle comporte un moteur moyeu.

Un tel véhicule motocycle présente ainsi la possibilité de voir sa longueur hors tout diminuer drastiquement lorsqu'il est plié. En effet, selon l'invention, la diminution de longueur du véhicule motocycle correspond à la totalité de la longueur ramenée sur l'horizontale de l'ensemble bras oscillant/roue arrière, également dénommé train arrière dans la suite.

L'invention permet le repliement des engins à moteur qui sont généralement carénés et qui ont donc des contraintes spécifiques de volume et de configuration au sujet de la conception même du châssis.

Le fait d'avoir un châssis ouvert en son centre et de venir y loger le train arrière constitué par le bras oscillant et la roue arrière, est une caractéristique tout à fait originale de l'invention.

Avantageusement, l'ensemble bras oscillant/roue arrière est libre de pivoter vers l'avant du véhicule et par le bas sur un angle supérieur à 180°.

Avec une telle caractéristique, on assure une extension maximale vers l'arrière de l'ensemble bras oscillant/roue arrière quand il est déplié et un repliement maximal de cet ensemble dans le châssis évidé quand il est plié. Cela permet de répondre au besoin particulier des véhicules à moteur d'avoir un empattement le plus important possible.

Dans une réalisation avantageuse, le châssis comprend un double berceau dont les branches sont raccordées au tube de direction verticalement ou en oblique, chacune de ces branches étant par ailleurs raccordée à une longe latérale, l'espace entre les branches du double berceau et les longes latérales définissant l'évidement intérieur du châssis.

Cette réalisation autorise l'allongement du bras oscillant sans allonger la longueur du châssis rapportée sur l'horizontale. En effet, la roue arrière peut alors passer, lors du repliement du bras oscillant, entre les branches du double berceau. Le point où ces branches se rejoignent à proximité du tube de direction est, en effet, plus haut que les longes latérales qui constituent une partie du plancher et qui portent le bras oscillant. La distance à prendre en compte pour le mouvement du bras oscillant par rapport au châssis est alors la diagonale entre ce point et l'axe de rotation du bras oscillant qui est de longueur supérieure à la longueur de l'évidement rapportée à l'horizontale.

Selon une caractéristique avantageuse, la longueur maximale de l'évidement intérieur du châssis et l'ensemble bras oscillant/roue arrière présentent des longueurs proches.

Selon cette caractéristique, le bras oscillant est aussi long que la longueur interne du châssis voire même un peu plus long. Ainsi, en repliement, la roue vient toucher la face interne avant du châssis, voire passe en force en roulant sur la face interne avant du châssis. Cette similitude des longueurs de l'évidement du châssis et de l'ensemble bras oscillant/roue arrière assure une compacité maximale au véhicule motocycle une fois celui-ci replié. Bien sur, préférentiellement, la longueur extérieure du châssis est alors proche de celle de l'évidement. On assure alors une compacité maximale une fois l'engin replié. On entend par « longueurs proches », des longueurs qui permettent que ne dépasse pas l'un ou l'autre des deux éléments d'une distance supérieure à 10%, et préférentiellement 5%, de la longueur totale d'un élément par rapport à l'autre élément, ces longueurs étant rapportées sur le plan longitudinal.

Cela correspond à un des objets de l'invention, à savoir réaliser un véhicule motocycle, à deux ou trois roues, à moteur de type scooter ou motocyclette, repliable dont le rapport dimensions déployées/dimensions repliées, en particulier la longueur, est le plus important possible.

Il est en effet souhaitable pour la circulation sur route que le véhicule soit le plus long possible en position déployée, soit environ 170 cm pour atteindre la dimension d'un scooter mais aussi que le véhicule présente un encombrement très réduit en position repliée, soit la dimension d'une valise, c'est-à-dire une longueur de 90 cm environ.

L'intérêt majeur est de concilier deux nécessités contradictoires : la longueur déployée maximale qui confère son empattement à l'engin et donc sa stabilité à partir d'une certaine vitesse et l'encombrement minimal en configuration repliée.

L'invention permet donc, tout en bénéficiant d'un véritable scooter, d'en rendre l'usage général plus facile particulièrement dans un contexte urbain car elle en facilite le rangement, la sécurisation ou le transport. Il est en effet envisageable de ranger le véhicule motocycle directement en appartement pour éviter le vol, les dégradations et les intempéries.

Il est également envisageable de l'emmener facilement avec soi pour prolonger un autre mode de transport que ce soit un transport en voiture individuelle ou en transport en commun.

Des usages nouveaux et additionnels par rapport aux deux roues à moteur classiques sont donc atteints grâce à la possibilité de transport et de rangement qui permet des circonstances d'utilisation plus nombreuses.

On remarque ici qu'il sera avantageux que la motorisation soit la plus compacte possible sur un véhicule selon l'invention. Il sera également nécessaire que la motorisation soit compatible avec les manipulations en diverses positions. Il est donc souhaitable que la motorisation évite les fluides. L'utilisation d'un moteur électrique inséré dans le moyeu de la roue et alimenté par batterie est donc la solution la meilleure et celle visée plus particulièrement par invention.

Avantageusement, l'ensemble de l'engin à moteur décrit selon l'invention sera réalisé en matériau léger de manière à en faciliter la manipulation et la portabilité.

Selon une caractéristique préférentielle de l'invention, le montant porte-selle est articulé autour d'un axe de rotation situé à proximité de ou confondu avec l'axe de rotation du bras oscillant, ce montant porte-selle étant apte à basculer vers l'avant du véhicule et par le haut du cycle de manière à rejoindre, au dessus du châssis du cycle, l'ensemble bras oscillant/roue arrière lorsque celui-ci est pivoté vers l'avant du véhicule.

L'invention assure ainsi le repliement du bras oscillant portant la roue arrière par pivotement longitudinal vers l'avant et de la selle par basculement vers l'avant et croisement du train arrière. Cette caractéristique permet d'assurer une compacité encore plus importante à l'engin motorisé en permettant de déplacer la selle vers l'avant dans un mouvement de basculement par le haut du cycle. On comprend bien que ce basculement est effectué dans un sens opposé au pivotement de l'ensemble bras oscillant/roue arrière.

On autorise ainsi à ce que les deux éléments représentant le plus fort encombrement sur l'arrière du véhicule à savoir le bras oscillant et le bloc de selle, se rassemblent vers l'avant du véhicule grâce à deux mouvements sensiblement symétriques de part et d'autre du châssis du cycle. Ces mouvements symétriques permettent que ces deux éléments se retrouvent accolés l'un à l'autre sur l'avant du véhicule au niveau du châssis.

Selon une caractéristique avantageuse, la longueur maximale de l'évidement intérieur du châssis, l'ensemble bras oscillant/roue arrière et le montant porte-selle présentent des longueurs proches.

Cette caractéristique de quasi identité des longueurs permet d'assurer une compacité maximale puisqu'aucun des éléments châssis, bras oscillant/roue arrière et montant porte selle, ne dépassera sensiblement des deux autres une fois le cycle replié. Un tel dépassement nuirait à la compacité du repliement.

Selon une caractéristique particulièrement intéressante de l'invention, la selle basculée vers l'avant permet de verrouiller en position l'ensemble bras oscillant/roue arrière.

Le basculement de la selle vers l'avant permet non seulement d'assurer une compacité au véhicule replié mais également d'empêcher tout dépliement inopportun du bras oscillant une fois celui-ci pivoté sur l'avant. Le basculement de la selle acquière ainsi un rôle fonctionnel important. Cette caractéristique est donc particulièrement importante dans la mesure où le véhicule motocycle est destiné à pouvoir être soulevé par exemple pour être mis dans le coffre d'une voiture. Le verrouillage simple et non encombrant du cycle plié est donc un enjeu crucial. La selle et le bras oscillant pourront porter pour cela des éléments pour accrocher le bras oscillant à la selle.

Dans un principe de compacité, selon une caractéristique avantageuse, le montant porte-selle est tel que l'ensemble bras oscillant/roue arrière pivoté vers l'avant est accueilli sous la selle.

On note que cette caractéristique peut être utilisée pour verrouiller en position l'ensemble bras oscillant/roue arrière par blocage de cet ensemble sous la selle.

Ainsi, selon une caractéristique particulière de l'invention, l'accueil de l'ensemble bras oscillant/roue arrière sous la selle permet de le verrouiller en position par blocage sous la selle.

Cette caractéristique donne une double fonction au basculement de la selle vers l'avant : augmenter la compacité et constituer un système de verrouillage en position repliée du bras oscillant.

Selon une caractéristique préférentielle, les portions de cercle parcourues par le point extrémal de l'ensemble bras oscillant/roue arrière et par le point sous la selle le plus proche de l'axe de rotation des montants de selle sont non concentriques et tels que les deux portions de cercle sont tangentes ou sécantes en un point situé au dessus du point de blocage de l'ensemble bras oscillant/roue arrière par la selle.

Selon les principes de cette caractéristique de l'invention, les deux entités bras oscillant et support de selle sont de longueurs sensiblement identiques et se croisent mais leurs orientations de pivotement sont différentes. Les cercles sur lesquels chacune se déplace dans le sens contraire ne sont pas concentriques, ce qui permet de ménager un moment favorable au croisement en dehors du moment de l'intersection des cercles qu'elles parcourent.

Hormis ce moment favorable, ces deux identités se télescopent et ne pourraient se croiser. Cette caractéristique permet d'assurer un blocage très facile à mettre en oeuvre de l'ensemble bras oscillant/roue arrière sous la selle.

Les déplacements relatifs de la roue arrière et de la selle sur des cercles de rayons proches et non concentriques autorisent le verrouillage par la selle du train arrière en position repliée.

Lorsque les deux entités se croisent, la roue arrière est remontée plus haut e que sa position de blocage et, donc, au dessus du point d'intersection des deux cercles. En continuant son mouvement vers le bas, et après avoir croisé la roue arrière remontée, la selle s'engage alors partiellement dans l'ouverture interne du châssis pour y buter. Elle crée alors une surépaisseur avec le châssis et / ou le carénage qui oppose un obstacle au retour de la roue vers le sol lorsque celle-ci redescend de sa position remontée au dessus de sa position de blocage. La roue se retrouve alors bloquée en position relevée par l'obstacle que constitue la surépaisseur de la selle sur le châssis ou le carénage. L'intersection des cercles parcourus par les deux blocs assure que la roue arrière est coincée sous la selle lorsqu'elle retombe.

Avantageusement, en outre, la selle est fixée avec mobilité au support de selle à l'aide d'une articulation lui permettant de se soulever par l'avant selon un axe de rotation rapporté à sa partie arrière ou à l'aide d'un système télescopique lui permettant de se soulever de manière à laisser passer la roue arrière avant d'être rabattue et de venir la bloquer.

Cette caractéristique consiste à donner un degré de liberté en rotation à la selle pour, non seulement, permettre ou faciliter un passage de la roue arrière sous la selle en utilisant des cercles de rotation les plus proches possible (compacité maximale) mais, également, permettre de bloquer le bras oscillant en position repliée. Elle comportera en outre avantageusement un logement en sa partie avant apte à favoriser le blocage de la roue en retombée vers l'avant.

Dans une réalisation particulièrement simple, la selle comprend une coque destinée à être revêtue du coussin de selle, cette coque comprenant un évidement central dans lequel vient se loger la roue.

Avantageusement, le soulèvement de la selle est combiné avec la présence du logement sous la selle. Cela autorise à ménager ce logement et la forme de la selle de telle manière que, sans le soulèvement de la selle, la roue ne pourrait accéder au logement à cause de la forme de la selle qui présenterait alors un volume empêchant le croisement avec la roue arrière.

Selon une autre caractéristique avantageuse de l'invention, le véhicule comprend un système de verrouillage de mise en position dépliée du montant de selle tel que la rotation du bras oscillant commande le verrouillage/déverrouillage du basculement du montant de selle.

Cette caractéristique permet de simplifier le repliement de l'engin en assurant que le mouvement du montant de selle soit possible dès lors que le bras oscillant a été entrainé dans son mouvement vers l'avant et par le bas et en bloquant le mouvement du montant porte-selle dès lors que le bras oscillant est ramené vers l'arrière lors du dépliement. Ainsi, avec cette caractéristique, le bras oscillant bloque le mouvement de la selle lorsque l'engin est déplié alors que, comme vu précédemment, le montant porte selle bloque le mouvement de l'ensemble bras oscillant/roue arrière lorsque l'engin est replié. Dans une réalisation particulière, le système de verrouillage de mise en position du montant de selle utilise une butée pour le montant porte-selle et au moins un ergot fixé au bras oscillant, coulissant le long d'une glissière en arc de cercle concentrique à la rotation de l'ergot, pratiquée dans le montant porte-selle, la présence de l'ergot sur cet arc de cercle s'opposant au rabattement vers l'avant du montant de selle.

On remarque ici que la glissière peut comporter une ou deux parois latérales de glissement. Dans le cas où elle ne présente qu'une paroi de glissement, elle est alors avantageusement constituée d'un simple relief en forme d'arc de cercle sur lequel vient glisser l'ergot Un tel relief est suffisant puisque l'appui à assurer s'exerce sur une unique direction. L'ergot fixé sur le bras oscillant à proximité de l'axe de rotation, pivote avec celui-ci selon un arc de cercle dont le centre est l'axe de rotation du bras oscillant. En position engin déplié, cet ergot vient donc glisser dans la glissière, par exemple en s'apposant simplement sur le relief en arc de cercle dont le centre est avantageusement également l'axe de rotation du bras oscillant. La glissière est fixée au montant porte-selle dont le pivotement vers l'avant s'effectue selon un arc de cercle dont le centre est le pivot de rotation de ce montant. Pour cette réalisation, le pivot du montant de selle est différent de l'axe de rotation du bras oscillant, et de préférence positionné en avant et plus haut.

Ainsi l'ergot pivote le long du relief formant glissière en arc de cercle ou à l'intérieur de la glissière lorsque celle-ci comprend deux parois latérales. La glissière étant portée par le montant de selle lui-même pivotant selon un arc de cercle différent, les deux cercles se croisent alors assurant l'opposition de l'ergot au mouvement du montant de selle.

Ainsi, si le montant de selle est sollicité en pivotement vers l'avant, par exemple sous l'effet du freinage, la surface du relief formant glissière ou l'une des parois de la glissière vient ainsi immédiatement en butée sur l'ergot quels que soient les mouvements du bras oscillant en position déployée. Ainsi l'ergot tant qu'il est positionné en apposition au relief formant glissière ou inséré dans la glissière, maintient en position le montant de selle.

Avantageusement le dimensionnement de la glissière sera tel que l'ergot s'y appose ou s'y insère sans jeu, quand le bras oscillant est à la verticale et le montant de selle en position vers l'arrière donc déployée. Ainsi, entre la verticale et son extension vers l'arrière, le bras oscillant portant l'ergot maintient la selle en position. Par contre, entre la verticale et son extension vers l'avant, le bras oscillant libère le montant de selle qui peut ainsi basculer vers l'avant.

Un tel système de mise en position situé à proximité des axes de rotation autour desquels sont articulés le bras oscillant et le montant porte selle, constitue un des moyens utiles pour permettre la réalisation de Invention de manière simple, compacte et robuste. Il est en effet nécessaire que le montant porte selle soit immobilisé vers l'arrière du véhicule de manière à ne pas basculer vers l'avant, par exemple lorsque l'utilisateur freine. II est également utile que le bras oscillant soit solidarisé du montant de selle ainsi que du châssis, dès lors qu'il est déployé. L'avantage du système de mise en position revendiqué est qu'il permet de bloquer les deux éléments mobiles en position avec peu de manipulations, peu de gestes. Cette réalisation demande à ce que le montant de selle soit déplié avant que ne vienne être placé le bras oscillant en position déployée.

Selon une autre réalisation, le système de verrouillage de mise en position du montant de selle utilise une butée pour le montant porte-selle et au moins une pièce mobile, par exemple une bille, portée par le châssis s'engageant et se désengageant d'un orifice prévu dans le montant porte-selle en fonction du déploiement du bras oscillant qui porte une structure en came biseautée pour provoquer les mouvements de la bille.

La bille est insérée dans un logement tubulaire de même diamètre à l'arrière du châssis, implanté transversalement. Ce logement est prolongé selon le même axe, à l'intérieur du montant de selle, d'un logement tubulaire de diamètre inférieur de façon à ce que la bille puisse s'y engager en butée mais seulement partiellement et selon une profondeur inférieure à son diamètre.

La came est fixée solidairement au bras oscillant et son disque biseauté vient fermer le logement de la bille. En fonction de son biseau, et selon la rotation du bras oscillant, soit la came compresse la bille au fond de son logement où la bille est alors positionnée pour partie dans le châssis et pour partie dans le montant de siège, entravant tout mouvement de celui-ci, soit elle libère la bille qui, ainsi, n'entrave plus le mouvement du montant de selle, libre alors de basculer vers l'avant.

Avantageusement un système de réglage de la position du disque biseauté de la came, permet d'ajuster la compression qu'il applique à la bille, par exemple des vis permettant de le positionner à la distance idoine de la bille.

Cette réalisation permet un déploiement du véhicule plus délicat, car exigeant un réglage, donc avec risques de déréglage, de la compression de la came biseautée sur la bille. Les positions relatives des éléments en mouvement sont donc moins rigoureuses que dans le cas où une glissière et un ergot sont utilisés. Néanmoins, cette réalisation autorise aussi des mouvements simultanés du montant porte selle et du bras oscillant pour déplier le cycle et verrouiller les éléments mobiles en position. Elle autorise aussi que le montant porte-selle soit fixé sur le même axe de rotation que le bras oscillant, permettant une réalisation plus compacte.

Selon une caractéristique particulière de l'invention, le bras oscillant comprend un système d'amortissement basé sur une butée élastique entre un élément porté par le bras oscillant et un élément porté par le montant porte-selle ou le châssis.

Un tel système d'amortissement revient à simplement munir le bras oscillant d'un élément élastique venant en butée sur un autre élément de butée porté par le montant porte selle ou le châssis. Une telle butée élastique est avantageusement réalisée avec un tampon, par exemple réalisé en caoutchouc. Cette butée élastique a un rôle d'amortisseur par percussion ou écrasement. Le bras oscillant n'étant pas attaché au châssis par l'amortisseur, il est donc libre de pivoter selon une grande amplitude.

Ainsi, avantageusement, l'amortisseur du bras oscillant n'est pas lié au châssis. En effet, un bras oscillant est classiquement pré-angulé entre son axe de rotation fixé au châssis, l'appui au sol de la roue et l'amortisseur fixé entre le bras oscillant et le châssis. L'ensemble de ces trois points forme un triangle permettant de maintenir le bras oscillant en position.

Selon invention, le bras oscillant s'appose préférentiellement en compression sur le châssis à l'endroit de l'amortisseur et aucun lien ne s'oppose à sa détente. Ceci évite, lors du repliement, d'avoir à détacher un quelconque amortisseur du châssis pour permettre au bras oscillant de pivoter selon le mouvement prévu par invention.

Néanmoins, on remarque qu'il pourrait être envisagé de réaliser un système amortisseur selon un principe différent. En effet, l'amortisseur pourrait être par exemple attaché au châssis. Dans ce cas, il serait nécessaire de détacher cet amortisseur du bras oscillant afin de procéder au repliement, ce qui complique l'opération de repliement.

Selon une caractéristique avantageuse, le bras oscillant comprend un élément faisant béquille permettant d'exercer, en appuyant sur l'arrière du véhicule, une force vers le haut pour le pivotement de l'ensemble bras oscillant/roue arrière lorsque celui-ci est pivoté sur l'avant.

Cette caractéristique permet de faire remonter facilement vers le haut, par pression vers le bas, l'ensemble bras oscillant roue arrière replié vers l'avant de manière à autoriser le passage de la selle au-dessus de l'ensemble bras oscillant/roue arrière. L'utilisation d'une pression vers le bas pour faire remonter le train arrière dans l'évidement du châssis permet à l'utilisateur d'exploiter son poids par l'intermédiaire de son pied.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 présente une vue en perspective d'un cycle selon l'invention ;
- les figures 2A à 2G décrivent les séquences de repliement d'un engin selon l'invention ;
- la figure 3 montre une caractéristique préférentielle de l'invention ;
- la figure 4 montre un exemple de système amortisseur pouvant être utilisé dans un véhicule selon l'invention ;
- la figure 5 montre la selle échancrée pour fournir un logement à la roue arrière en position repliée ;
- les figures 6A à 6C montrent un premier exemple de réalisation pour les éléments d'articulation permettant le pivotement du bras oscillant et le basculement du montant de selle, ces éléments d'articulation permettant également le blocage en position ; et
- la figure 7 montre un second mode de réalisation permettant le pliage et le déploiement d'un véhicule cyclomoteur selon l'invention et son blocage en position.

### Description détaillée d'un mode de réalisation

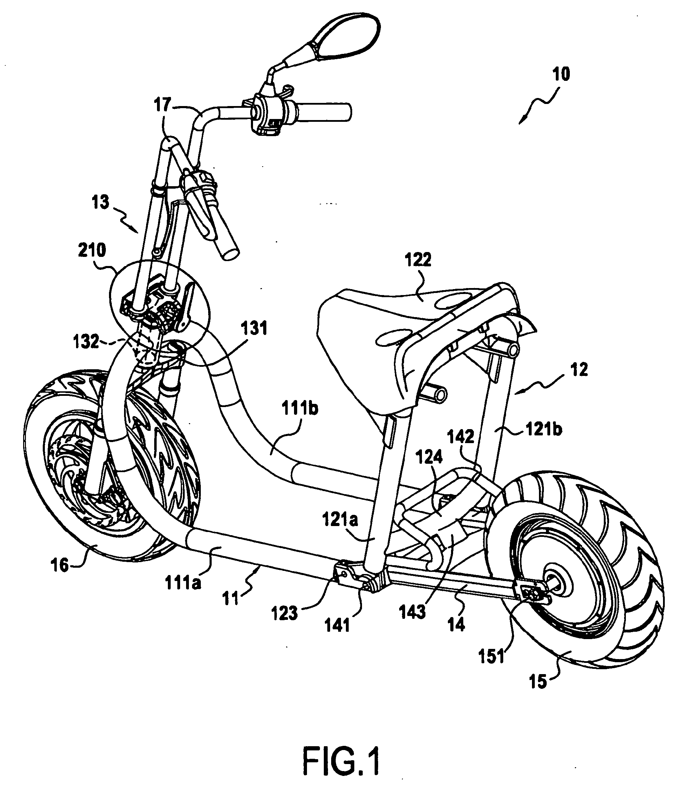

La figure 1 représente un véhicule cyclomoteur 10 selon l'invention comprenant un châssis 11 évidé en son centre.

Ainsi que présenté sur la figure 1, le châssis 11 a avantageusement une configuration en double berceau dont les branches sont reliées à deux longes latérales 111a et 111b. Ce châssis 11 supporte un montant porte selle 12 pour porter une selle 122. Le montant porte selle est constitué de deux montants latéraux 121a et 121b faisant fourche sous la selle 122.

Sur ce châssis 11, est monté autour d'un axe de rotation 141, un bras oscillant 14 portant une roue arrière 15 montée autour d'un axe 151. Avantageusement, le châssis 11 présente un plancher susceptible de s'ouvrir ou de se retirer dès lors que l'on veut replier le véhicule motocycle. Dans le cas où un moteur électrique est utilisé, ce plancher accueillera avantageusement des batteries.

Sur l'avant, le véhicule cyclomoteur 10 représenté sur l'exemple de la figure 1 présente un axe de direction 13 articulé engagé dans un pivot de fourche 132 monté dans un tube de direction 131 et supportant une roue avant 16. Dans sa partie supérieure, l'axe de direction comprend un guidon 17.

Selon l'invention, l'ensemble bras oscillant 14/roue arrière 15 est libre de pivoter vers l'avant du véhicule 10 et par le bas du véhicule 10 autour d'un axe de rotation 141 pour venir se loger dans l'évidement du châssis 11. Le bras oscillant 14, et donc l'axe de rotation 141, sera avantageusement fixé le plus à l'arrière possible du châssis 11. En effet, plus le bras oscillant 14 est fixé en arrière, plus la longueur dépliée du cycle 10 est importante. Cette longueur dépliée confère son empattement à l'engin.

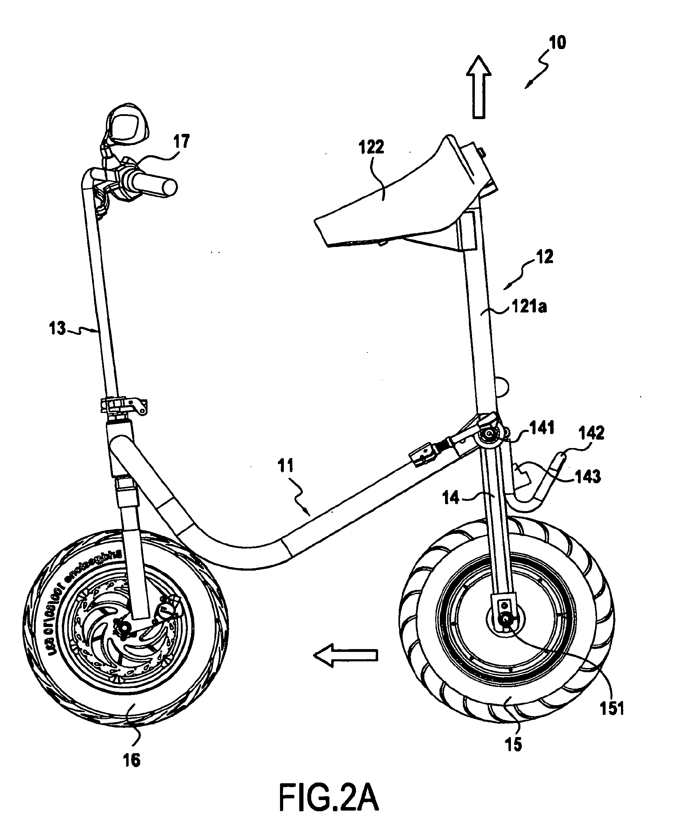

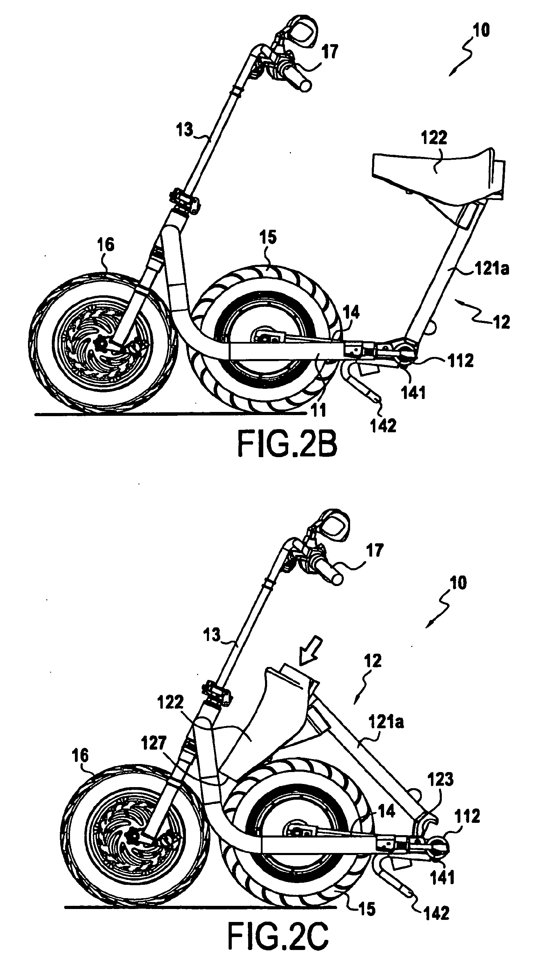

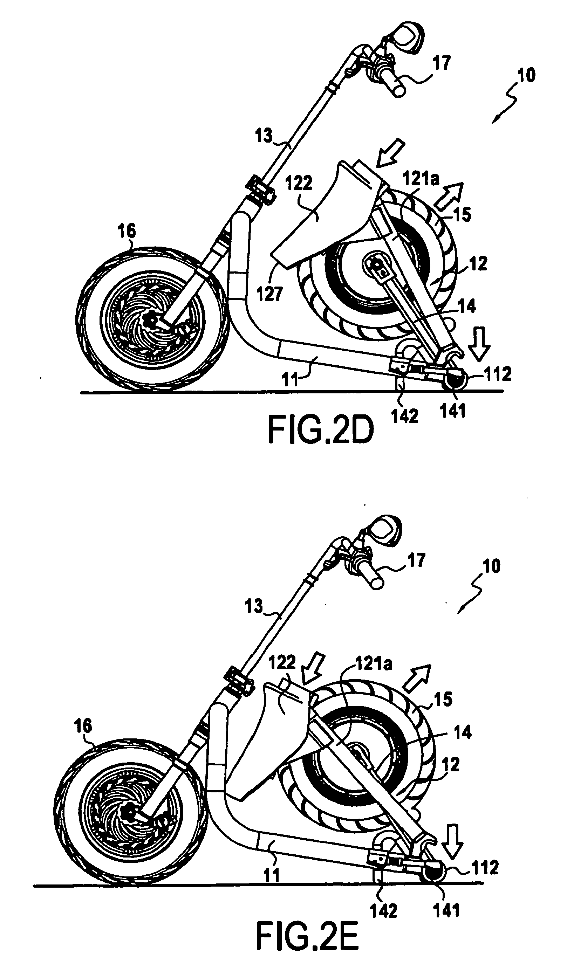

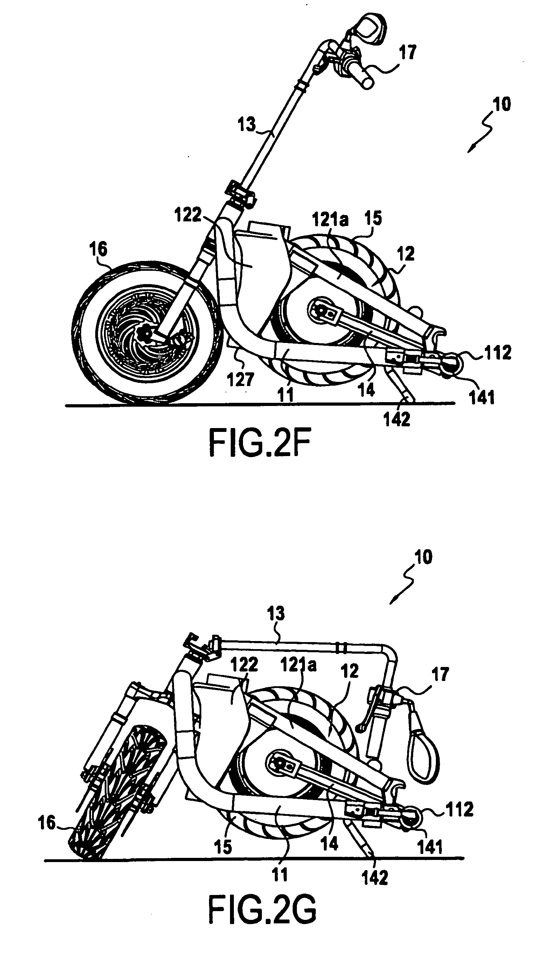

La figure 2 montre la séquence de pliage du cycle 10. Sur la figure 2A, on comprend que le bras oscillant 14 est articulé autour d'un axe de rotation 141 sur un angle autorisant le train arrière constitué par le bras oscillant 14 avec la roue arrière 15 à dépasser vers l'avant la verticale de l'axe de rotation 141.

On remarque ici que l'invention vise particulièrement les véhicules cyclomoteurs motorisés par l'intermédiaire d'un moteur électrique. Un tel moteur est généralement installé au sein de la roue arrière 15, ce qui confère à celle-ci un poids particulièrement important par rapport au reste du véhicule 10. Le poids résultant de la roue arrière 15 est un avantage important pour invention.

En effet, cette caractéristique assure, ainsi que présenté sur la figure 2A, que la roue arrière 15 reste au contact du sol lorsque l'on soulève le véhicule cyclomoteur 10 en le soulevant à l'arrière, par exemple en tirant vers le haut sur la selle 122 ainsi qu'illustré par une flèche vers le haut. En soulevant suffisamment l'arrière du véhicule cyclomoteur 10, on remarque ainsi que l'axe 151 de la roue arrière 15 va passer à la verticale de l'axe 141 autour duquel pivote le train arrière comme illustré par la seconde flèche. Une fois l'axe 151 de la roue 15 passé à la verticale du point d'axe de rotation 141 du bras oscillant 14, il suffit de tirer le châssis 11 légèrement vers l'arrière pour que le bras oscillant 14 reparte en inclinaison vers l'intérieur du châssis 11.

L'arrière de l'engin 10 ainsi relevé, le bras oscillant 14 supportant la roue 15 passe donc d'une position horizontale projetée en arrière à une position verticale entraînant vers l'avant la roue 15 roulant au sol.

Passé le point d'inflexion, l'utilisateur peut alors relâcher l'engin pour que le châssis 11 retourne en position horizontale comme illustré sur la figure 2B. En effet, une fois la verticale dépassée par la roue 15, il suffit alors de rabaisser l'arrière du véhicule cyclomoteur 10 pour engendrer la poursuite du mouvement de pivotement du bras oscillant 14 vers l'avant du cycle 10. Le bras oscillant 14 tend alors à reprendre une position horizontale mais projetée en avant de son axe de rotation 141 et non plus en arrière. Le train arrière se trouve alors logé au sein de l'évidement du châssis 11. Il est ainsi escamoté. On constate que la rapidité du relevage facilite le passage du point d'inflexion.

En effet, un relèvement rapide avance la roue arrière 15 vers l'avant. Celle-ci prend alors une vitesse suffisante et passe d'elle-même le point d'inflexion. Le relâchement de l'engin 10 termine de forcer la roue arrière 15 vers l'avant. La roue 15, ainsi que le bras oscillant, sont alors engagés dans l'évidement du châssis 11. Cette progression en rotation du bras oscillant 14 s'achève par le contact d'un élément faisant béquille 142 sur le sol. Cette béquille 142 fait système de levier et facilite la remontée de la roue 15.

Ainsi que représenté sur la figure 2C, et selon une caractéristique préférentielle de l'invention, le montant de selle 12 est articulé autour d'un axe 123 et est alors rabattu vers l'avant dans un mouvement de bascule, dans un sens de rotation opposé à la rotation effectuée par le bras oscillant 14 ainsi qu'illustré par la flèche. La selle 122 vient alors au contact de la roue arrière 15 selon un mode de réalisation préférentiel de invention.

Selon une caractéristique particulière de l'invention, la selle 122 est portée par deux montants porte-selle latéraux 121a et 121b, faisant fourche sous la selle 122 et laissant ainsi un évidement central sous la selle 122. Le support de selle 122 est donc avantageusement en forme de fourche dont les deux montants latéraux 121a et 121b sont disposés de part et d'autre du châssis 11 avec un écartement suffisant pour laisser passer entre eux le train arrière lors du repliement. Les montants 121a et 121b viennent donc se placer de part et d'autre de la roue 15.

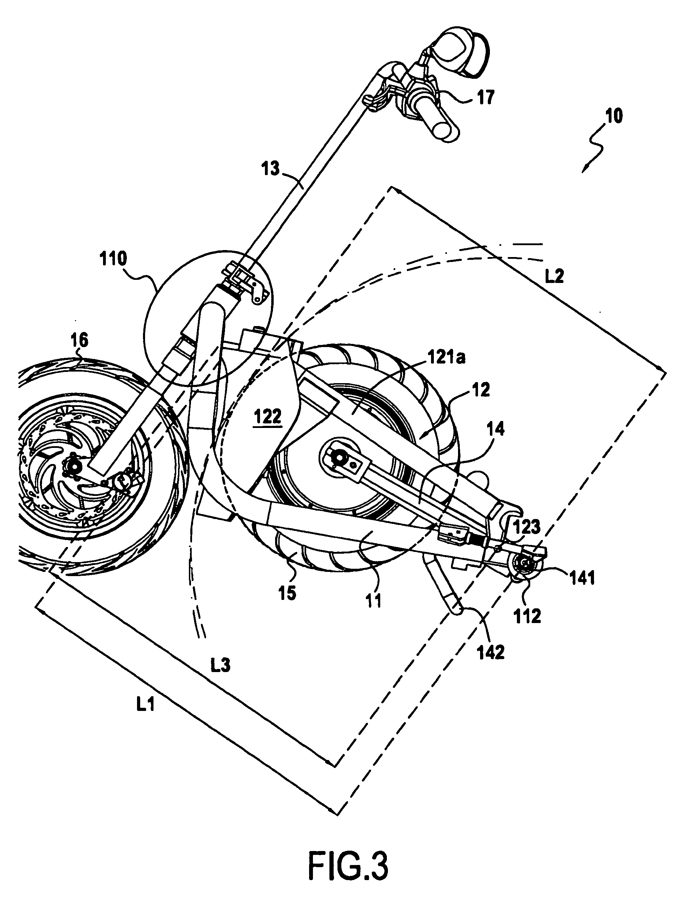

On voit, sur la figure 2C, que les mouvements des montants porte selle et du bras oscillant sont empêchés par le contact entre ces deux structures. En effet, selon l'invention, il est prévu que les axes de rotation du bras oscillant et du montant porte selle ne soient pas identiques. Dans ce cas, les cercles sur lesquels se déplacent le dessous de la selle 122 et le point le plus éloigné de la roue arrière 15 sont avantageusement sécants ou tangents. L'utilisation de cercles sécants est illustrée sur la figure 3 et on voit bien sur cette figure que cela engendre la présence du point de blocage 127 de la figure 2C. Les cercles parcourus respectivement par le point sous la selle, en trait pointillés, et par la roue arrière, en trait mixte, sont en effet sécants en deux points. Le croisement représenté sur les figures 2D et 2E n'est donc possible qu'entre les deux points d'intersection de ces cercles.

Le système est encore renforcé si le point de contact/blocage 127 de la selle avec la roue est mobile dans l'espace grâce, par exemple, au soulèvement de la selle via une charnière en sa partie arrière. Ainsi ce point 127 fait office de verrouillage de la roue arrière en retombée vers l'avant, d'autant plus efficace que le rayon de pivotement de l'avant de la selle est plus court que le rayon de pivotement de la roue, le croisement de la selle et de la roue étant alors permis par le soulèvement de la selle.

Le dépassement du point d'intersection le plus bas, qui est un point de blocage, est obtenu quand l'ensemble roue arrière/bras oscillant est remonté grâce au système de levier permis par la béquille 142. Cela est représenté sur la figure 2D.

Sur cette figure, l'ensemble bras oscillant/roue arrière est remonté suffisamment au-dessus du sol pour dépasser le point intersection, ou, le cas échéant, le point de tangence, des deux cercles en exerçant une pression suffisante vers le bas sur l'engin 11. Au niveau de l'axe 141 du bras oscillant 14, on obtient en effet un effet de levier par appui vers le bas, suivant la flèche, sur l'allongement du bras oscillant 14 permettant de soulever la roue 15 à moindre effort. L'effort est encore réduit par la position proche du sol du point d'appui pour l'utilisateur et la pression peut être effectuée avec le pied en mobilisant le poids du corps. Ceci est d'autant plus intéressant puisque la roue arrière 15 est généralement lourde car elle inclut le moteur. La selle 122 est avantageusement articulée sur les montants 121a et 121b de manière à être soulevée par son avant vers le haut, ainsi que cela est représenté sur la figure 2D, pour passer sur la roue arrière 15.

Pour croiser les montants de selle 121a et 121b, la roue arrière 15 est encore plus remontée vers le haut grâce à une pression vers le bas utilisant l'élément béquille 142 comme point de levier. Cela est représenté sur les figures 2D et 2E. Les mouvements relatifs des montants de selle et du train arrière illustrés par des flèches font alors qu ils se croisent. Une fois qu'elle a croisé la roue arrière 15, la selle 122 est alors rabattue vers le bas et l'avant par son apposition progressive sur le châssis ou le carénage, pour venir devant l'ensemble bras oscillant/roue arrière. Cet ensemble et le montant de selle portant la selle sont alors regroupés en un seul bloc grâce au blocage réalisé par la selle 122 rabattue vers le bas ainsi que représenté sur la figure 2F.

Pour réduire la hauteur de l'engin replié, la selle 122 s'insère avantageusement dans le châssis 11 comme représenté sur la figure 2F. L'ensemble bras oscillant/roue arrière vient alors se loger dans la selle 122 comme représenté sur la figure 2F. A cause de l'intersection des cercles représentée sur la figure 3, la roue arrière 15 est alors nécessairement bloquée par la présence de la selle 122, partiellement engagée dans l'évidement du châssis 11. Ce blocage est encore renforcé par le rabattement de l'extrémité avant 127 de la selle.

La figure 3 montre une caractéristique préférentielle de Invention selon laquelle le point extrémal de l'ensemble bras oscillant 14/roue arrière 15 décrit une portion de cercle, en trait mixte, non concentrique avec le cercle parcouru par le point sous la selle 122 le plus proche de l'axe de rotation du montant de selle 12, en trait pointillés. Selon une caractéristique avantageuse de l'invention, les deux cercles parcourus par ces deux points sont quasiment tangent ou sécants en un point situé légèrement au-dessus du point de blocage de l'ensemble bras oscillant/roue arrière, la selle 122 étant articulée de manière à laisser passer la roue arrière 15 avant que la selle ne soit rabattue pour venir bloquer la roue 15, grâce à son extrémité 127.

Cette quasi intersection ou intersection des cercles permet le passage de la selle 122 au-dessus du bras oscillant 14 et de la roue arrière 15 tout en permettant, qu'une fois ce point passé, le rabattement de la selle 122 puisse assurer le blocage de l'ensemble bras oscillant/roue arrière. On a vu que, dans son repliement maximum, la selle 122 s'abaisse jusqu'à ce que son extrémité avant rentre dans le châssis 11 et le carénage. Avantageusement, dans ce mouvement, la selle 122 et son montant croisent le bras oscillant/roue arrière 15 qui reste ensuite logé dans la selle 122 par en dessus. On constate alors que la selle 122, à l'avant du châssis 11, crée une surépaisseur sur le châssis 11 ou le carénage qui empêche la roue 15 de franchir, en sens inverse, le point de contact avec la selle 122.

La selle rabattue garde alors en son sein, la roue arrière 15 verrouillée.

Avantageusement, la selle 122 rabattue est ensuite maintenue en position par le rabattement du guidon au-dessus d'elle, ce qui l'empêche de se dégager.

Plus précisément, sur la figure 3, on voit que le point extrémal de la roue arrière 15 et le point sous la selle 122 sur son support pivotent en sens contraire, suivant des cercles de rayons proches mais non concentriques et sécants en au moins un point. Ces rayons sont dimensionnés à la fois pour procurer une longueur maximum au train arrière contenue de son insertion dans le châssis 11, et procurer la hauteur idoine à la selle 122 en position déployée. Généralement, cette hauteur est d'environ 75 cm du sol.

Le rayon choisi permet également l'insertion de la selle 122 au sein du châssis 11 sur l'avant de celui-ci. En outre, comme vu précédemment, les rayons permettent, aux deux ensembles, de se croiser à un moment favorable pour terminer leur mouvement respectif de rabattement.

Sur la figure 3, on remarque aussi que les longueurs L1, L2 et L3, respectivement de l'évidement du châssis, de la fourche formée par les montants de selle et de l'ensemble bras oscillant/ roue arrière, sont avantageusement trois longueurs comparables. On assure ainsi avec ces identités de longueur que la compacité maximale une fois l'engin replié est atteinte.

Lorsque l'on dit que les trois parties châssis, train arrière et selle sur son support doivent être de longueurs égales, on remarque que la donnée de base est la longueur du châssis. Une fois la longueur de châssis 11 fixée, les longueurs du train arrière et du support de selle avec la selle seront alors déterminées selon les principes de compacité évoqués ci-dessus.

Ce dimensionnement quasi-identique permet d'obtenir la maximisation du rapport longueur déployée/longueur repliée. En effet, tout centimètre supplémentaire gagné en longueur intérieure du châssis se traduit par un centimètre gagné en longueur du train arrière et donc en longueur totale d'empattement après déploiement. Il faut souligner que la longueur maximum du châssis déployée est alors fonction de la dimension repliée recherchée selon le principe de l'invention. Elle conditionne en effet la longueur du train arrière puisque celui-ci vient se loger à l'intérieur du châssis et celle de l'ensemble selle et son support puisque celle-ci croise le train arrière en passant au-dessus lors du repliement

Il faut noter que l'ensemble selle et son support est limité en allongement pour fournir la hauteur d'assise sur l'engin et pour s'insérer à l'intérieur du châssis en position repliée. Or, il se trouve que les exigences en hauteurs d'assise sont tout à fait compatibles avec l'utilisation de longueurs sensiblement égales pour le châssis, le train arrière et la selle sur son support.

Pour maximiser la longueur du châssis 11 pour une longueur repliée totale donnée, le châssis 11 est conçu selon l'invention avec une forme évidée au contre. Cette forme peut être en rectangle, en U, en J tant que cet évidement procure une largeur idoine et surtout une longueur idoine pour accueillir, en son sein, l'ensemble de la roue arrière 15 et de son bras oscillant 14 lors du repliement.

Avantageusement, le châssis 11 sera implanté en oblique, l'avant étant vers le haut. Plus l'angle d'oblicité est important, plus le châssis 11 offre de longueur interne pour accueillir l'ensemble bras oscillant 14/roue arrière 15, tout en respectant la longueur possible dans le plan horizontal. Par exemple, une inclinaison en oblique de 10 à 15 degrés permet d'obtenir le résultat selon l'invention sans conduire à une augmentation exagérée de l'épaisseur hors tout du châssis 11.

Ainsi, pour un châssis d'une longueur dans le plan horizontal de 640 mm, une inclinaison à 10 degrés permet de réaliser un châssis oblique de 650 mm. Les 10 mm ainsi gagnés permettent un allongement d'autant de l'ensemble bras oscillant/roue arrière allongé dans le châssis lors du repliement.

Une alternative intéressante est que le châssis 11 procure une forme intérieure oblique pour l'ensemble de la roue arrière 15 et de son bras oscillant 14 lors du repliement alors qu'il est globalement horizontal. Cette alternative prend une forme optimum si le châssis adopte une configuration en double berceau dont les branches sont fixées au tube de direction, car l'oblique est maximisée, remontant jusqu'au tube de direction.

Le châssis 11 étant d'une épaisseur inférieure au diamètre de la roue 15 qu'il accueille, il est alors surmonté d'une plate-forme ouvrante ou amovible afin d'accueillir la roue arrière en son sein.

Cette plate-forme a vocation d'accueillir les pieds du pilote. En configuration ouvrante, elle s'ouvre, lors du repliement, pour laisser dépasser la roue arrière 15 lorsque celle-ci est insérée dans le châssis 11. En configuration amovible, elle n'est plus apposée sur le châssis 11 et donc libère complètement l'espace.

Eventuellement, le train arrière peut être encore allongé au-delà de la longueur intérieure du châssis 11 qui constitue la donnée de base et, au-delà de la hauteur de la selle et de son support par l'utilisation de la capacité de déformation de matériau souple. Il sera par exemple augmenté d'une longueur égale à la capacité d'écrasement du pneu sur le châssis 11 pour passer en force, cette longueur étant par exemple égale à 10 mm.

Afin de permettre le croisement avec la selle 122, celle-ci est avantageusement fortement amincie en sa partie centrale inférieure, de façon à dégager un passage pour la roue 15. A cet endroit, elle sera avantageusement constituée d'un matériau souple dont la déformation accroît d'autant la longueur du train arrière.

Sur la figure 2G, le véhicule motocycle 10 est entièrement replié, le tube de guidon 17 étant ramené sur le cycle replié 11. Pour déverrouiller la roue 15 telle qu'elle est représentée sur la figure 2G, on effectue l'opération inverse en appuyant sur le bras oscillant sur l'arrière de l'engin 10, on fait levier sur la béquille 142, ce qui remonte la roue 15 repliée, dégageant ainsi la selle 122.

Une fois la selle 122 redressée, la roue arrière 15 se trouve dégagée et retombe en contact avec le sol. Il suffit alors de soulever l'engin par la selle de la même manière qu'en repliement. La roue arrière est alors projetée vers l'arrière. Passé le point d'inflexion, il suffit de laisser retomber l'engin qui se trouve alors en position déployée.

Il faut noter que tout autre système de verrouillage en position de l'ensemble bras oscillant/roue arrière pourrait être adopté comme des clavettes, des doigts d'indexage, des crochets, des verrous, etc.... La selle 122 est alors rabattue et maintenue en position mais sans fonction spécifique de verrouillage de l'ensemble bras oscillant/roue arrière. Néanmoins ces réalisations seront généralement plus complexes à manipuler..

Sur les figures 1 et 2, on constate que le bras oscillant 14 comprend une butée élastique 143 dont le rôle est de venir en percussion sur une traverse 124 du montant de selle 12 et d'y assurer un rôle d'amortisseur.

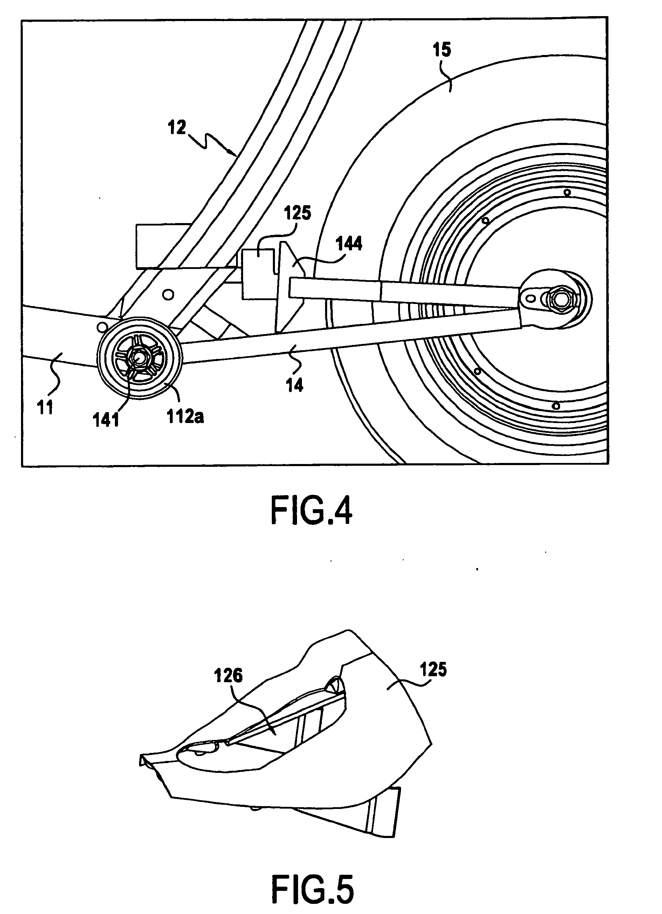

La figure 4 montre une variante de réalisation où un tampon élastique 125 est porté par le montant de selle 12 et une plaque de butée, notée 144, portée par le bras oscillant 14, vient buter contre ce tampon 125 lorsque le bras oscillant 14 est déployé.

Sur cette figure, on remarque aussi la présence d'une petite roue latérale 112a qui a son symétrique sur l'autre coté du cycle 10 et qui est utile pour faire rouler au besoin le véhicule cyclomoteur 10 une fois replié.

La figure 5 montre un exemple de coque 125 de selle 122 adaptée à l'invention. Cette coque 125 est destinée à être recouverte de mousse. Elle comprend un évidement central 126 dans lequel viendra se loger la portion de roue arrière 15 à la manière représentée sur la figure 2F.

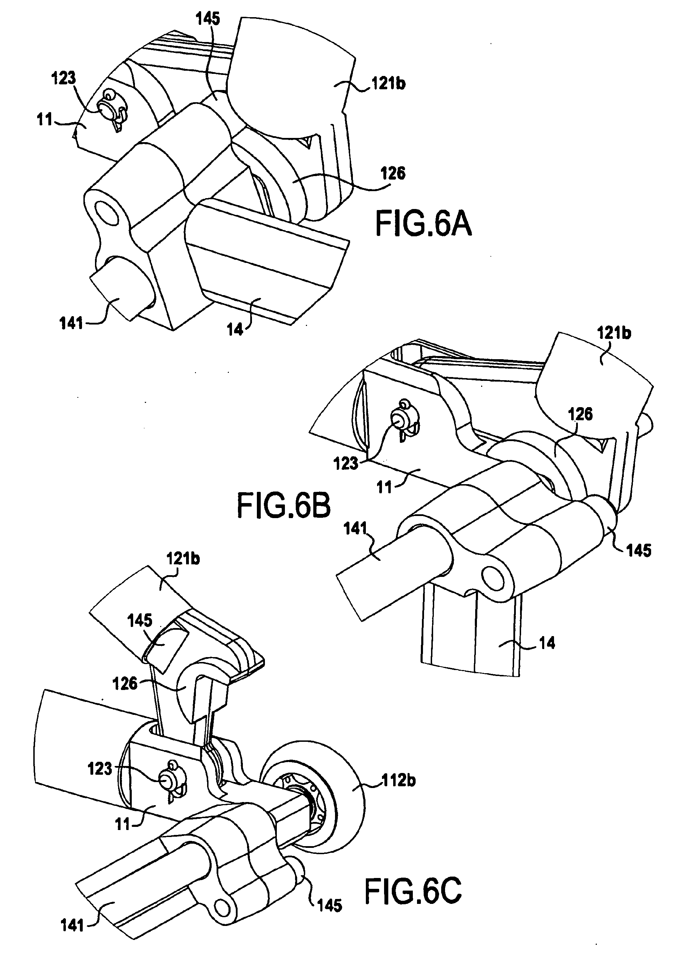

La figure 6 représente en détail les articulations autour des axes 141 et 123. La vue en perspective grossie représentée sur la figure 6 correspond au côté droit du véhicule 10 représenté sur les figures 1 et 2 au niveau de la liaison châssis/ bras oscillant Cette figure montre un premier mode de réalisation pour la mise en position de l'ensemble bras oscillant/roue arrière et montant de selle et son maintien.

Sur la figure 6, on remarque que le montant de selle 121b est, dans sa configuration déployée, en appui en porte-à-faux arrière sur le châssis 11. Le châssis 11 comprend pour cela un logement vertical ouvert pour accueillir la base du support de selle 12 lorsque celle-ci est déployée. Le support de selle 12 s'engage dans le logement vertical quand la selle est déployée et s'en dégage quand la selle 122 est repliée par pivotement autour de l'axe de rotation situé en avant du logement.

Le bras oscillant 14, articulé autour de l'axe 141, est partiellement représenté. Selon un mode de réalisation avantageux de l'invention, le bras oscillant 14 comprend un ergot 145 qui va venir glisser dans une glissière qui est ici définie par un relief 126 le long duquel l'ergot 145 vient glisser sur le montant latéral 121b du montant de selle 12 également partiellement représenté.

Dans la réalisation de la figure 6, la glissière 126 est ainsi une glissière à une seule face et ouverte. L'appui de l'ergot 145 sur la face 126 est en effet suffisant pour que le mouvement du montant de selle 121b vers l'avant soit empêché dès lors que le bras oscillant 14 est déployé ainsi que présenté sur la figure 6A.

Il est néanmoins tout à fait envisageable que l'ergot 145 vienne glisser dans une glissière à deux faces latérales creusée dans le montant de selle 121b. La réalisation à une seule face permet cependant d'utiliser un ergot 145 plus gros ce qui confère à l'ensemble une meilleure robustesse.

On voit bien, sur la figure 6, que le montant de selle 121b est articulé, quant à lui, autour de l'axe 123 qui est situé à proximité de l'axe 141 mais qui n'est pas confondu avec celui-ci. L'axe 123 est en effet légèrement en avant et au-dessus de l'axe 141 autour duquel est articulé le bras oscillant 14.

Cela assure les caractéristiques préférentielles représentées sur la figure 3 selon lesquelles l'arc de cercle parcouru par un point en dessous de la selle 122, représenté en trait pointillés, est d'un rayon inférieur à celui, représenté en trait mixte, parcouru par le bras oscillant 14 et la roue arrière 15 tout en assurant que ces cercles soient sécants ou tangents.

Sur la figure 6B, correspondant à l'étape de repliement/dépliement de la figure 2A, on voit que l'ergot 145 s'est déplacé en rotation en glissant sur la surface glissière 126. On remarque qu'alors la position de l'ergot 145 ne permet plus d'empêcher le mouvement du montant de selle 121b articulé autour de l'axe 123, de basculer vers l'avant. Le montant de selle 121b est alors débloqué et libre de pivoter autour de l'axe 123 vers l'avant du cycle.

Sur la figure 6C, le bras oscillant 14 est ramené sur l'avant du cycle et on voit que le montant de selle 121b est toujours débloqué malgré sa position déployée.

Sur la figure 6D, on voit que le bras oscillant 14 est ramené sur l'avant du cycle et que le montant de selle 121b est lui aussi basculé sur l'avant après son dégagement de l'ergot 145.

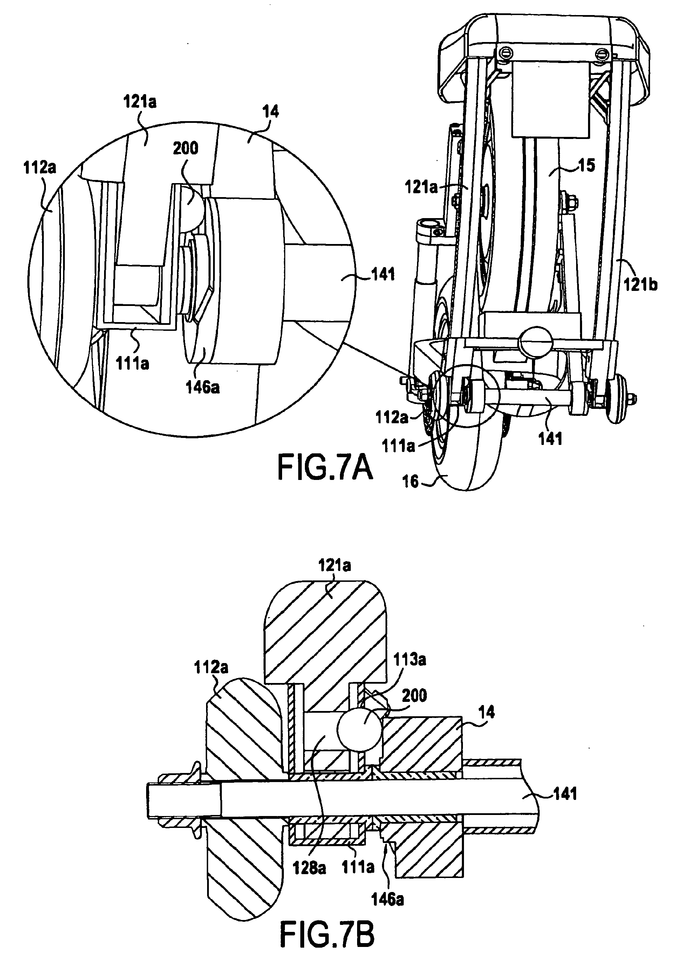

La figure 7 montre une autre réalisation pour le blocage entre des éléments en pivotement et en basculement, cette fois sur le coté gauche du cycle et avec le bras oscillant 14 ramené sur l'avant. Selon cette réalisation, une bille 200 est alors successivement enfoncée, sur la figure 7B, ou dégagée, sur la figure 7A, dans une cavité 128a prévue à cet effet sur le montant de selle 121a grâce à une surface en forme de came biseautée 146a et au travers d'un orifice 113a pratiqué dans la longe 111a du châssis 11.

La surface faisant came 146a est un disque rotatif biseauté, fixé au bras oscillant 14 concentriquement et solidairement. Ce disque rotatif accompagne le bras oscillant 14 dans sa rotation, dans un plan proche du châssis 11, par exemple de quelques millimètres. Ce disque peut être épais de quelques centimètres. Dans le plan de sa tranche, il est biseauté en partie, chacune des deux extrémités latérales du bras oscillant en est équipé.

Lorsque le bras oscillant 14 est pivoté vers l'avant en soulevant la selle 122, ainsi que représenté sur la figure 7A, la came 146a est placée de telle manière que la bille 200 se dégage de la cavité 128a prévue dans le montant de selle 121a, autorisant alors la selle et le montant de selle 121a à être basculés vers l'avant.

Au contraire, quand le bras oscillant 14 est ramené vers l'arrière, comme représenté sur la figure 7B, la came 146a vient presser sur la bille 200 qui, au travers de l'orifice 113a pratiqué dans la longe 111a, vient se loger dans la cavité 128a du montant de selle 121a. Le mouvement sur l'avant du montant de selle 121a est alors empêché.

Autrement dit, le châssis 11 comprend deux orifices 113a et 113b, transversaux et horizontaux ouverts et symétriques, débouchant chacun dans une cavité, respectivement 128a et 128b des montants supports de selle 121a et 121b et, d'autre part, sur la face intérieure du châssis 11, chacun en face d'un disque rotatif, respectivement 146a et 146b, fixés sur le bras oscillant 14.

Les orifices transversaux et horizontaux 113a et 113b contiennent chacun une pièce mobile 200 qui est généralement une bille. La longueur des orifices transversaux et horizontaux au travers des éléments 111a et 111b de châssis 11 est inférieure à la longueur de la pièce mobile 200 de façon qu'une partie de celle-ci soit toujours émergeante d'un côté ou de l'autre de l'orifice. Ainsi, s'il accueille une bille de 15 mm de diamètre, sa longueur sera inférieure à 15 mm.

La pièce mobile 200 est positionnée dans l'orifice et guidée pour un déplacement entre la face interne du châssis 11 et la cavité dans le support de selle. Cette pièce 200 est au contact de la face biseautée du disque rotatif.

En fonction de l'épaisseur du biseau, elle est plus ou moins contrainte vers l'intérieur de la cavité pratiquée dans le support de selle. La base des montants supports de selle engagés dans le logement vertical portent les cavités 128a et 128b qui sont dans le prolongement de l'orifice transversal de la pièce mobile 200.

L'ouverture de ces cavité est adaptée à la taille de la pièce mobile 200 pour ne la laisser pénétrer que partiellement. Par exemple, elle peut être tubulaire, semi-sphérique en creux et d'un diamètre inférieur à celui de la bille 200 pour permettre à celle-ci de pénétrer partiellement.

Lorsque le disque rotatif 146a exerce une pression progressive grâce à sa forme biseautée au fur et à mesure de son pivotement sur la pièce mobile 200, celle-ci se déplace alors transversalement. La bille 200 ainsi poussée sort partiellement de l'autre côté et pénètre en butée de la cavité. Elle vient entraver alors tout mouvement du montant support de selle 121a. Ainsi, de chaque coté du cycle, le mouvement du montant support de selle est empêché.

En position du bras oscillant 14 comprise entre la verticale et l'extension vers l'arrière, les pièces mobiles 200 sont contraintes par les disques biseautés 146a et 146b pour s'insérer en partie dans les cavité 128a et 128b. Elles solidarisent alors le support de selle 12 avec le châssis 11.

En position du bras oscillant 14 entre la verticale et l'extension vers l'avant, les disques biseautés 146a et 146b libèrent les pièces mobiles 200 qui n'entravent plus le support de selle 12 ainsi libéré. La selle 122 redevient mobile pour être repliée.

Selon ce dispositif, le seul geste de relèvement de l'engin déclenche le pivotement du bras oscillant 14 jusqu'à la verticale et libère le verrouillage de la selle 122. Par contre, le relâchement de l'engin accompagnant le pivotement du bras oscillant 14 vers l'arrière, assure le verrouillage concomitant de la selle 122, ce qui simplifie les manipulations.

La réalisation de la figure 7 permet de verrouiller le mouvement de la selle 122 et du support de selle 12 en un seul mouvement. Elle permet aussi d'utiliser un même axe de rotation pour l'ensemble bras oscillant/roue arrière et pour les montants de selle. Néanmoins, en utilisant un même axe de rotation, l'utilisation de cercles non concentriques est compromise pour bloquer la roue avec la selle: Il est alors nécessaire que la selle soit articulée pour se soulever vers le haut et ainsi laisser passer l'ensemble bras oscillant/roue arrière.

On note ici que, même si elle permet une réalisation particulièrement avantageuse de l'invention, l'articulation de la selle n'est pas nécessaire, même si avantageuse, dans le cas où des cercles non concentriques sont utilisés et, donc, où deux axes de rotation sont utilisés. En effet, dans ce cas, la selle peut être fixe dès lors que la roue arrière peut monter assez haut pour dépasser suffisamment le point intersection et permettre le croisement avec les montants de selle.

Les réalisations présentées sur les figures 6 et 7 assurent un verrouillage et déverrouillage du repliement et du dépliement de la selle et de la roue arrière par des opérations particulièrement faciles à réaliser.

En effet, la rotation du bras oscillant commande le verrouillage/déverrouillage des montants de selle, sans autre manipulation. Ainsi, en une seule action, le train arrière est basculé vers l'avant et la selle sera verrouillée ou déverrouillée.

Selon l'invention, non seulement le mouvement de la selle vers l'avant permet de bloquer l'ensemble bras oscillant/roue arrière en position pliée, mais également le mouvement du bras oscillant vers la position dépliée permet de bloquer le mouvement de la selle vers l'avant en position dépliée du cycle.

Les deux mouvements de pliage/dépliage sont donc doublement fonctionnels selon les modes de réalisation préférentiels de l'invention.

On remarque enfin que l'objet de l'invention sera avantageusement utilisé en combinaison avec un dispositif d'articulation permettant un repliement du guidon sur l'axe du cycle. Dans ce cas, il peut être envisagé, avantageusement et originalement, un rabattement de la roue avant sur le côté du cycle afin de réduire la longueur repliée du cycle subséquemment ou concomitamment avec le repliement de l'axe de direction sur l'axe du cycle. Dans un tel cas, il sera avantageux que la fourche avant soit dissymétrique, en l'occurrence monotube, de manière à dégager au maximum un espace de repliement du train arrière du cycle selon l'invention entre les branches du châssis en double berceau.

En effet, on voit sur la figure 2G, que la fourche peut constituer un obstacle au repliement vers l'avant du train arrière ou au basculement de la selle. Elle peut en effet buter contre la selle lors du repliement. Dans ce cas, il est nécessaire de raccourci la longueur des montants de selle et, également, a priori, celle du train arrière. Cela nuit aux principes de l'invention qui est d'obtenir un véhicule le plus long possible une fois déplié et le plus court possible une fois plié.

On comprend ici que l'utilisation d'une fourche monotube permet d'exploiter au maximum l'espace vers l'avant entre les branches du châssis en double berceau. On peut alors allonger encore le montant de selle et donc également le train arrière, ce qui est tout à fait souhaitable pour poursuivre les buts de l'invention.

On remarque enfin que diverses mises en oeuvre peuvent être réalisées selon les principes de l'invention.

## Revendications

1. Véhicule motocycle (10) comprenant un châssis (11) évidé en son centre et supportant au moins un montant porte-selle (12) pour porter une selle (122), châssis (11) sur lequel est monté, autour d'un axe de rotation (141), un bras oscillant (14) portant une roue arrière (15), **caractérisé en ce que** l'ensemble bras oscillant/roue arrière (14/15) est libre de pivoter vers l'avant du véhicule (10) et par le bas du véhicule (10) autour de son axe de rotation (141) pour venir se loger dans l'évidement du châssis (11).

2. Véhicule motocycle (10) selon la revendication 1, **caractérisé en ce que** l'ensemble bras oscillant/roue arrière (14/15) est libre de pivoter vers l'avant du véhicule (10) et par le bas sur un angle supérieur à 180°.

3. Véhicule motocycle (10) selon l'une des revendications 1 et 2, **caractérisé en ce que** le châssis (11) comprend un double berceau dont les branches sont raccordées au tube de direction (131) verticalement ou en oblique, chacune de ces branches étant par ailleurs raccordée à une longe latérale (111a,111b), l'espace entre les branches du double berceau et les longes latérales (111a,111b) définissant l'évidement intérieur du châssis (11).

4. Véhicule motocycle (10) selon l'une des revendications 1 à 3, **caractérisé en ce que** la longueur maximale de l'évidement intérieur du châssis (11) et l'ensemble bras oscillant/roue arrière (14/15) présentent des longueurs quasi-identiques.

5. Véhicule motocycle (10) selon l'une des revendications 1 à 4, **caractérisé en ce que** le montant porte-selle (12) est articulé autour d'un axe de rotation (123) situé à proximité de ou confondu avec l'axe de rotation (141) du bras oscillant (14), ce montant porte-selle (12) étant apte à basculer vers l'avant du véhicule (10) et par le haut du cycle (10) de manière rejoindre, au dessus du châssis (11) du cycle (10), l'ensemble bras oscillant/roue arrière (14/15) lorsque celui-ci est pivoté vers l'avant du véhicule (10).

6. Véhicule motocycle (10) selon la revendication 5, **caractérisé en ce que** la longueur maximale de l'évidement intérieur du châssis (11), l'ensemble bras oscillant/roue arrière (14/15) et le montant porte-selle (12) présentent des longueurs substantiellement identiques.

7. Véhicule motocycle (10) selon l'une des revendications 5 et 6, **caractérisé en ce que** la selle (122) basculée vers l'avant permet de verrouiller en position repliée l'ensemble bras oscillant/roue arrière (14/15).

8. Véhicule motocycle (10) selon l'une des revendications 5 à 7, **caractérisé en ce que** le montant porte-selle (12) est tel que l'ensemble bras oscillant/roue arrière (14/15) pivoté vers l'avant est accueilli sous la selle (122).

9. Véhicule motocycle (10) selon les revendications 7 et 8, **caractérisé en ce que** l'accueil de l'ensemble bras oscillant/roue arrière (14/15) sous la selle (122) permet de le verrouiller en position par blocage sous la selle (122);

10. Véhicule motocycle (10) selon l'une des revendications 5 à 9, **caractérisé en ce que** les portions de cercle parcourues par le point extrémal de l'ensemble bras oscillant/roue arrière (14/15) et le point (127) sous la selle (122) le plus proche de l'axe de rotation (123) des montants de selles (12) sont non concentriques et telles que les deux portions de cercle sont tangentes ou sécantes en un point situé au dessus du point de blocage de l'ensemble bras oscillant/roue arrière (14/15) par la selle (122).

11. Véhicule motocycle (10) selon l'une des revendications 5 à 10, **caractérisé en ce que** la selle (122) est fixée avec mobilité au support (12) de selle (122) à l'aide d'une articulation lui permettant de se soulever par l'avant selon un axe de rotation rapporté à sa partie arrière ou à l'aide d'un système télescopique lui permettant de se soulever de manière à laisser passer la roue arrière (15) avant d'être rabattue et de venir la bloquer.

12. Véhicule motocycle (10) selon l'une des revendications 5 à 11, **caractérisé en ce qu'**il comprend un système de verrouillage de mise en position dépliée du montant de selle (12) tel que la rotation du bras oscillant (14) commande le verrouillage/déverrouillage du basculement du montant de selle (12).

13. Véhicule motocycle (10) selon la revendication 12, **caractérisé en ce que** le système de verrouillage de mise en position du montant de selle (12) utilise une butée pour le montant porte-selle (12) et au moins un ergot (145) fixé au bras oscillant (14), coulissant dans une glissière (126)en arc de cercle concentrique à la rotation de l'ergot (145), pratiquée dans le montant porte-selle (12), la présence de l'ergot (145) sur cet arc de cercle s'opposant au rabattement vers l'avant du montant de selle (12).

14. Véhicule motocycle (10) selon la revendication 12, **caractérisé en ce que** le système de verrouillage de mise en position du montant de selle (12) utilise une butée pour le montant porte-selle (12) et au moins une pièce mobile (200) portée par le châssis (11) s'engageant et se désengageant d'un orifice (128a) prévu dans le montant porte-selle (121a) en fonction du déploiement du bras oscillant (14) qui porte une structure en came biseautée (146a) pour provoquer les mouvements de la pièce mobile (200).

15. Véhicule motocycle (10) selon l'une des revendications précédentes, **caractérisé en ce que** le bras oscillant (14) comprend un système d'amortissement (125) basé sur une butée élastique entre un élément porté par le bras oscillant (14) et un élément porté par le montant porte-selle (12) ou le châssis (11).

16. Véhicule motocycle (10) selon l'une des revendications précédentes, **caractérisé en ce que** le bras oscillant (14) comprend un élément faisant béquille (142) permettant d'exercer, en appuyant sur l'arrière du véhicule (10), une force vers le haut pour le pivotement de l'ensemble bras oscillant/roue arrière (14/15) et son relèvement au-dessus du sol lorsque celui-ci est pivoté sur l'avant.

## Patentansprüche

1. Motorisiertes Zweiradfahrzeug (10) umfassend einen Rahmen (11), der in seiner Mitte ausgespart ist und der wenigstens eine Sattelstütze (12) trägt, um einen Sattel (122) zu tragen, Rahmen (11), an dem ein Schwenkarm (14), der ein Hinterrad (15) trägt, um eine Rotationsachse (141) angebracht ist, **dadurch gekennzeichnet, daß** die Anordnung aus Schwenkarm/Hinterrad (14/15) zum vorderen Teil des Fahrzeugs (10) und über die Unterseite des Fahrzeugs (10) um ihre Rotationsachse (141) frei schwenken kann, um in der Aussparung des Rahmens (11) aufgenommen zu werden.

2. Motorisiertes Zweiradfahrzeug (10) nach Anspruch 1, **dadurch gekennzeichnet, daß** die Anordnung aus Schwenkarm/Hinterrad (14/15) zum vorderen Teil des Fahrzeugs (10) und über die Unterseite um einen Winkel größer als 180° frei schwenken kann.

3. Motorisiertes Zweiradfahrzeug (10) nach einem der Ansprüche 1 und 2, **dadurch gekennzeichnet, daß** der Rahmen (11) ein Doppelgestell umfaßt, dessen Schenkel mit dem Steuerrohr (131) vertikal oder schräg verbunden sind, wobei ein jeder dieser Schenkel darüber hinaus mit einem Seitenlängsteil (111 a, 111 b) verbunden ist, wobei der Raum zwischen den Schenkeln des Doppelgestells und den Seitenlängsteilen (111 a, 111 b) die Innenaussparung des Rahmens (11) definiert.

4. Motorisiertes Zweiradfahrzeug (10) nach einem der Ansprüche 1 bis 3, **dadurch gekennzeichnet, daß** die maximale Länge der Innenaussparung des Rahmens (11) und die Anordnung aus Schwenkarm/Hinterrad (14/15) quasi identische Längen aufweisen.

5. Motorisiertes Zweiradfahrzeug (10) nach einem der Ansprüche 1 bis 4, **dadurch gekennzeichnet, daß** die Sattelstütze (12) um eine Rotationsachse (123), die in der Nähe der Rotationsachse (141) des Schwenkarms (14) gelegen ist oder mit dieser zusammenfällt, angelenkt ist, wobei diese Sattelstütze (12) geeignet ist, zum vorderen Teil des Fahrzeugs (10) und über die Oberseite des Zweirads (10) zu schwenken, um oberhalb des Rahmens (11) des Zweirads (10) auf die Anordnung aus Schwenkarm/Hinterrad (14/15) zu treffen, wenn diese zum vorderen Teil des Fahrzeugs (10) geschwenkt wird.

6. Motorisiertes Zweiradfahrzeug (10) nach Anspruch 5, **dadurch gekennzeichnet, daß** die maximale Länge der Innenaussparung des Rahmens (11), die Anordnung aus Schwenkarm/Hinterrad (14/15) und die Sattelstütze (12) im wesentlichen identische Längen aufweisen.

7. Motorisiertes Zweiradfahrzeug (10) nach einem der Ansprüche 5 und 6, **dadurch gekennzeichnet, daß** der nach vorne umgelegte Sattel (122) ermöglicht, die Anordnung aus Schwenkarm/Hinterrad (14/15) in zusammengeklappter Position zu verriegeln.

8. Motorisiertes Zweiradfahrzeug (10) nach einem der Ansprüche 5 bis 7, **dadurch gekennzeichnet, daß** die Sattelstütze (12) derart ist, daß die nach vorne geschwenkte Anordnung aus Schwenkarm/Hinterrad (14/15) unter dem Sattel (122) aufgenommen wird.

9. Motorisiertes Zweiradfahrzeug (10) nach den Ansprüchen 7 und 8, **dadurch gekennzeichnet, daß** die Aufnahme der Anordnung aus Schwenkarm/Hinterrad (14/15) unter dem Sattel (122) ermöglicht, sie in der Position durch Blockieren unter dem Sattel (122) zu verriegeln.

10. Motorisiertes Zweiradfahrzeug (10) nach einem der Ansprüche 5 bis 9, **dadurch gekennzeichnet, daß** die Kreisabschnitte, die von dem Extremalpunkt der Anordnung aus Schwenkarm/Hinterrad (14/15) und von dem Punkt (127) unter dem Sattel (122), welcher der Rotationsachse (123) der Sattelstützen (12) am nächsten liegt, durchlaufen werden, nicht konzentrisch und derart sind, daß die beiden Kreisabschnitte an/in einem oberhalb der Stelle des Blockierens der Anordnung aus Schwenkarm/Hinterrad (14/15) durch den Sattel (122) gelegenen Punkt tangential oder schneidend sind.

11. Motorisiertes Zweiradfahrzeug (10) nach einem der Ansprüche 5 bis 10, **dadurch gekennzeichnet, daß** der Sattel (122) mit Hilfe eines Gelenks, das ihm ermöglicht, sich um eine an seinen hinteren Teil angesetzte Rotationsachse mit dem vorderen Teil anzuheben, oder mit Hilfe eines Teleskopsystems, das ihm ermöglicht, sich anzuheben, um das Hinterrad (15) passieren zu lassen, bevor er heruntergeklappt wird und dieses blockiert, an der Stütze (12) des Sattels (122) beweglich befestigt ist.

12. Motorisiertes Zweiradfahrzeug (10) nach einem der Ansprüche 5 bis 11, **dadurch gekennzeichnet, daß** es ein Verriegelungssystem, um die Sattelstütze (12) in die ausgeklappte Position zu bringen, umfaßt, das derart ist, daß die Rotation des Schwenkarms (14) das Verriegeln/Entriegeln des Schwenkens der Sattelstütze (12) steuert.

13. Motorisiertes Zweiradfahrzeug (10) nach Anspruch 12, **dadurch gekennzeichnet, daß** das Verriegelungssystem, um die Sattelstütze (12) in Position zu bringen, einen Anschlag für die Sattelstütze (12) und wenigstens einen an dem Schwenkarm (14) befestigten Vorsprung (145) verwendet, der in einer zu der Rotation des Vorsprungs (145) konzentrischen, in der Sattelstütze (12) ausgebildeten kreisbogenförmigen Gleitbahn (126) gleitet, wobei das Vorliegen des Vorsprungs (145) an diesem Kreisbogen sich dem Vorklappen der Sattelstütze (12) entgegensetzt.

14. Motorisiertes Zweiradfahrzeug (10) nach Anspruch 12, **dadurch gekennzeichnet, daß** das Verriegelungssystem, um die Sattelstütze (12) in Position zu bringen, einen Anschlag für die Sattelstütze (12) und wenigstens ein von dem Rahmen (11) getragenes bewegliches Teil (200) verwendet, das in Abhängigkeit des Ausklappens des Schwenkarms (14), der eine abgeschrägte Nockenstruktur (146a) trägt, um die Bewegungen des beweglichen Teils (200) zu bewirken, mit einer in der Sattelstütze (121 a) vorgesehenen Öffnung (128a) in und außer Eingriff gelangt.

15. Motorisiertes Zweiradfahrzeug (10) nach einem der vorhergehenden Ansprüche, **dadurch gekennzeichnet, daß** der Schwenkarm (14) ein auf einem elastischen Anschlag beruhendes Dämpfungssystem (125) zwischen einem von dem Schwenkarm (14) getragenen Element und einem von der Sattelstütze (12) oder dem Rahmen (11) getragenen Element umfaßt.

16. Motorisiertes Zweiradfahrzeug (10) nach einem der vorhergehenden Ansprüche, **dadurch gekennzeichnet, daß** der Schwenkarm (14) ein Ständerelement (142) umfaßt, das ermöglicht, durch Drücken auf den hinteren Teil des Fahrzeugs (10) eine Kraft nach oben auszuüben, um die Anordnung aus Schwenkarm/Hinterrad (14/15) zu verschwenken und sie über dem Boden abzuheben, wenn dieses vorne verschwenkt wird.

## Claims

1. A motorcycle vehicle (10) comprising a chassis (11) recessed in its center and supporting at least one saddle-holder upright (12) for bearing a saddle (122), a chassis (11) on which is mounted, around an axis of rotation (141), an oscillating arm (14) bearing a rear wheel (15) **characterized in that** the oscillating arm/rear wheel assembly (14/15) is free to pivot towards the front of the vehicle (10) and from the bottom of the vehicle (10) around its axis of rotation (141) so that it will be accommodated in the recess of the chassis (11).

2. The motorcycle vehicle (10) according to claim 1, **characterized in that** the oscillating arm/rear wheel assembly (14/15) is free to pivot towards the front of the vehicle (10) and from the bottom over an angle of more than 180°.

3. The motorcycle vehicle (10) according to one of claims 1 and 2, **characterized in that** the chassis (11) comprises a double cradle, the branches of which are connected to the steering tube (131) vertically or obliquely, each of these branches being moreover connected to a side tether (111a, 111b), the space between the branches of the double cradle and the side tethers (111a, 111b) defining the interior recess of the chassis (11).

4. The motorcycle vehicle (10) according to one of claims 1 to 3, **characterized in that** the maximum length of the interior recess of the chassis (11) and the oscillating arm/rear wheel assembly (14/15) have almost identical lengths.

5. The motorcycle vehicle (10) according to one of claims 1 to 4, **characterized in that** the saddle-holder upright (12) is jointed around an axis of rotation (123) located in proximity to or coinciding with the axis of rotation (141) of the oscillating arm (14), this saddle-holder upright (12) being able to swing towards the front of the vehicle (10) and from the top of the cycle (10) so as to join up, above the chassis (11) of the cycle (10), with the oscillating arm/rear wheel assembly (14/15) when the latter is pivoted towards the front of the vehicle (10).

6. The motorcycle vehicle (10) according to claim 5, **characterized in that** the maximum length of the interior recess of the chassis (11), the oscillating arm/rear wheel assembly between (14/15) and the saddle-holder upright (12) have substantially identical lengths.

7. The motorcycle vehicle (10) according to one of claims 5 and 6, **characterized in that** the saddle (122) swung towards the front gives the possibility of locking, in the folded position, the oscillating arm/rear wheel assembly (14/15).

8. The motorcycle vehicle (10) according to one of claims 5 to 7, **characterized in that** the saddle-holder upright (12) is such that the oscillating arm/rear wheel assembly (14/15) pivoted towards the front is received under the saddle (122).

9. The motorcycle vehicle (10) according to claims 7 and 8, **characterized in that** by receiving the oscillating arm/rear wheel assembly (14/15) under the saddle (122), it is possible to lock it in position by blocking it under the saddle (122).

10. The motorcycle vehicle (10) according to one of claims 5 to 9, **characterized in that** the circular portions covered by the end point of the oscillating arm/rear wheel assembly (14/15) and the point (127) under the saddle (122), which is the closest to the axis of rotation (123) of the saddle upright (12), are non-concentric and such that both circular portions are tangent or secant in a point located above the point for blocking the oscillating arm/rear wheel assembly (14/15) by the saddle (122).

11. The motorcycle vehicle (10) according to one of claims 5 to 10, **characterized in that** the saddle (122) is movably attached to the saddle (122) support (12) by means of a joint allowing it to be lifted from the front according to an axis of rotation added to its rear portion or by means of a telescopic system allowing it to be lifted so as to let through the rear wheel (15) before being pushed back and blocking it.

12. The motorcycle vehicle (10) according to one of claims 5 to 11, **characterized in that** it comprises a locking system for the unfolded positioning of the saddle upright (12) such that the rotation of the oscillating arm (14) controls the locking/unlocking of the swinging of the saddle upright (12).

13. The motorcycle vehicle (10) according to claim 12, **characterized in that** the locking system for the positioning of the saddle upright (12) uses an abutment for the saddle-holder upright (12) and at least one lug (145) attached to the oscillating arm (14) sliding in a slide (126) forming a circular arc concentric with the rotation of the lug (145) made in the saddle-holder upright (12), the presence of the lug (145) on this circular arc opposing the pushing back of the saddle upright (12) towards the front.

14. The motorcycle vehicle (10) according to claim 12, **characterized in that** the locking system for the positioning of the saddle upright (12) uses an abutment for the saddle-holder upright (12) and at least one movable part (200) borne by the chassis (11) engaging and disengaging from an orifice (128a) provided in the saddle-holder upright (121a) depending on the deployment of the oscillating arm (14) which bears a beveled cam structure (146a) for causing movements of the movable part (200).

15. The motorcycle vehicle (10) according to one of the preceding claims, **characterized in that** the oscillating arm (14) comprises a damping system (125) based on an elastic abutment between an element borne by the oscillating arm (14) and an element borne by the saddle-holder upright (12) or the chassis (11).

16. The motorcycle vehicle (10) according to one of the preceding claims, **characterized in that** the oscillating arm (14) comprises an element acting as a stand (142) with which, by pressing on the rear of the vehicle (10), an upward force may be exerted for pivoting the oscillating arm/rear wheel assembly (14/15) and raising it above the ground when the latter is pivoted onto the front.
